# EUROPEAN PATENT SPECIFICATION

(11) **EP 3 147 549 B1**
(45) Date of publication and mention of the grant of the patent: **01.08.2018**
(21) Application number: 15382458.6
(22) Date of filing: 22.09.2015
(51) Int. Cl.: F16L 43/00, F16L 9/127, B64D 13/00, C08G 73/10, C08K 7/06, F02C 7/18

(54) **AIRCRAFT BLEEDING DUCT IN COMPOSITE MATERIAL**
FLUGZEUGENTLÜFTUNGSLEITUNG AUS VERBUNDWERKSTOFF
CONDUITE DE PURGE D'AÉRONEF EN MATÉRIAU COMPOSITE

(43) Date of publication of application: 29.03.2017
(73) Proprietor: Airbus Defence and Space SA, 28906 Getafe Madrid (ES)
(72) Inventor: REDONDO CARRACEDO, Francisco José, 28906 Getafe (ES); TEJEDOR FOGUET, Sergio, 28906 Getafe (ES); BAUTISTA DE LA LLAVE, César, 28906 Getafe (ES); MARTÍN MORENO, Zulima, 28906 Getafe (ES); NOGUEROLES VIÑES, Pedro, 28906 Getafe (ES); LÓPEZ ROMANO, Bernardo, 28906 Getafe (ES); DELGADO, Sofía, 28906 Getafe (ES)
(74) Representative: Elzaburu S.L.P.

(56) References cited:
- EP-A2- 2 246 179
- US-A- 4 934 412
- US-A1- 2009 197 031
- US-A1- 2014 045 415
- US-B1- 6 359 107
- Sayata Ghose ET AL: "Phenylethynyl Terminated Imide (PETI) Composites Made by High Temperature Vartm", , 26 November 2010 (2010-11-26), pages 1-10, XP055256627, Retrieved from the Internet: URL:http://ntrs.nasa.gov/archive/nasa/casi .ntrs.nasa.gov/20100024233.pdf [retrieved on 2016-03-09]

## Description

### FIELD OF THE INVENTION

The present invention relates to non-straight ducts for conducting fluids at high temperatures and pressures made of composite material and more particularly to hot air ducts belonging to the bleed system of an aircraft.

### BACKGROUND

The hot air bleed ducts of an aircraft must meet the following basic requirements:
- Service work conditions: Operating Temperature 230º, Operating Pressure 4 bar.
- Thermal stability at Service work conditions.
- Thermal stability in case of thermal excursions of 30s-60s at 260ºC or 5s at 290°C.
- No weight loss at Operating Temperature during service life.
- No outgassing release of dust and/or toxic elements at Operating Temperature.
- No degradation of properties due to long term exposure.
- Appropriate Fire/Smoke/Toxicity (FST) behavior at Operating Temperature.

Other requirements that should be met are:
- No permanent deformation or leaks are allowed at Operating Pressure.
- No permanent deformations or leaks are allowed at a proof pressure of 1.5 x Operating Pressure.
- No breaks, permanent deformations or leaks are allowed at a burst pressure of 3 x Operating Pressure.
- Metallic welding/bonding/assembly tolerance
- Transmitted loads and vibrations tolerance
- No toxicity (when handling or storage).

The hot air bleed ducts of an aircraft are made of titanium and/or steel.
Currently, the hot air bleed ducts of an aircraft are made of titanium and/or steel because they are suitable materials to comply with the above-mentioned requirements as well as with the required structural and airtight properties.

The main disadvantage of the titanium and/or steel hot air ducts is the weight.

An additional disadvantage of titanium hot air bleed ducts is that their typical thin thickness makes them easily deformed in assembly operations.

Ducts made of composite material are known in the art such as commercially available ducts of thermosetting resins, mostly epoxy and phenolic resins, which are produced in most of the cases through filament winding or hand lay-up of fabrics. The typical service temperature of these ducts range between 120ºC - 200ºC (230ºC in the case of bismaleimide resins).

Oil and gas industries are staring to use composite pipes for drilling oil and gas in ultra-deep seawater and for hydraulic fracturing (tracking). In this case, the pipes are produced by extrusion or filament winding with different thermoplastic matrixes depending on the specific use: polypropylene (PP), polyethylene (PE), polyamide (PA), polyether-ether-ketone (PEEK), polyvinylidene fluoride (PVDF).

The service temperatures of these ducts range between 80ºC - 200ºC. The geometry is simple, straight or with gentle radius of curvature.

None of these ducts are suitable composite alternatives to the titanium/steel hot air bleed ducts. First of all their service temperature are below the required temperature (or in the limit). Secondly, to meet the rest of the requirements (such as Fire, Smoke and Toxicity (FST)) a multi-layer design should be employed to add these properties, which would penalize the benefit in terms of weight savings.

Besides, all commercially available composite ducts are straight ducts while the hot air bleed ducts have complex geometries (see Figure 1). Document US 2009/197031 A1 teaches a pipe that is integrated into the aircraft piping, characterized in that it is produced from a composite material that comprises a fiber-reinforced geopolymer resin matrix. Document EP 2 246 179 A2 discloses a composite material comprising a plurality of fiber tape strips woven or braided together. Each of the plurality of fiber tape strips is made of a single layer of unidirectional fibers. The fibers are at least partially embedded in a thermoplastic matrix. A tubular composite part is made from this composite material and of an internal film. A method of manufacturing the composite material comprises weaving or braiding the fiber tape strips, especially in the form of a tube. A method of manufacturing a composite part comprises pressurizing the film inside the tube while heating both the tube and the film up to their forming temperature so as to bond the film to the woven fiber tape strips. Document US 4 934 412 A shows a pipeline for an engine, wherein the walls of the pipe line are composed of a load-bearing inner layer of fiber reinforced, curable synthetic resin and of a heat insulating outer layer of fiber reinforced curable synthetic resin, bonded to the inner layer. For the production of the two layers a removable core is used, for example composed of a low melting metal alloy. Document US 2014/045415 A1 discloses a cabin air compressor outlet duct including an outlet portion, a first inlet portion fluidly connected to the outlet portion, and a second inlet portion fluidly connected to the outlet portion and joined to the first inlet through a curvilinear surface having a bend radius between about 2.50 inches (6.35 cm) and about 2.60 inches (6.60 cm).

### SUMMARY OF THE INVENTION

The invention provides non-straight ducts for conducting fluids at temperatures higher than 280ºC and pressures higher than 4 bar as defined in claim 1. Advantageously the high temperature resin is configured to be injected or infused in a temperature range of 280-290ºC and in a pressure range of 12-13 atm.

In another aspect, the invention provides an aircraft bleeding system comprising at least one of said non-straight ducts in the hot air subsystem aimed to reduce weight of the bleeding system by replacing ducts currently made of titanium or steel.

In another aspect, the invention provides an aircraft propulsion incorporating the abovementioned bleeding system. The invention also provides a process for bleeding hot gases in an aircraft as defined in claim 5. Other desirable features and advantages of this invention will become apparent from the subsequent detailed description of the invention and the appended claims, in relation with the enclosed drawings.

### BRIEF DESCRIPTION OF THE DRAWINGS

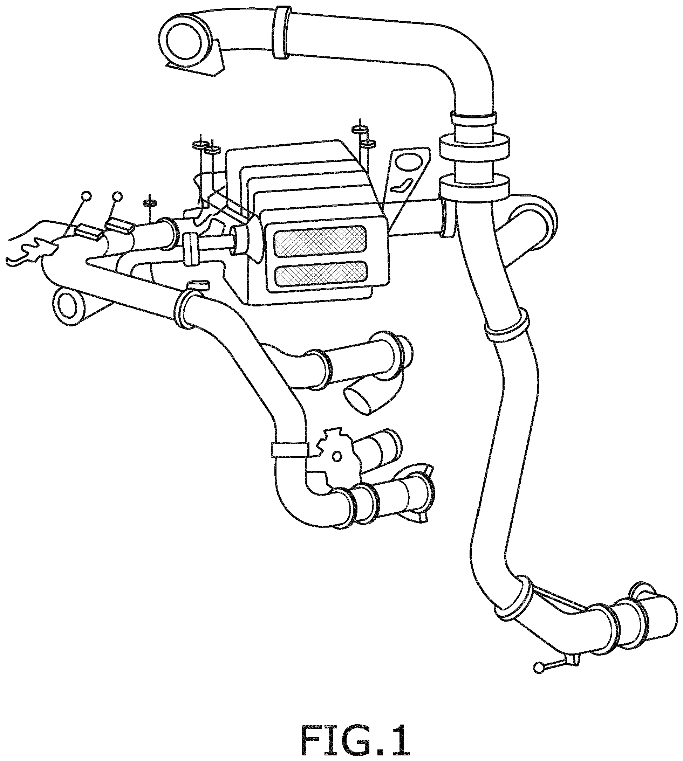

- Figure 1: is a perspective view of the pneumatic bleed air system of an aircraft.
- Figure 2: is a perspective view of a hot air bleed duct prototype according to the invention

### DETAILED DESCRIPTION OF THE INVENTION

Achieving a hot air bleed duct made of a composite material requires finding a suitable resin meeting its service requirements, mentioned in the Background, and an appropriate processing method that allows its manufacturing.

As the skilled man will easily understood there are several possible combinations with different theoretical possible candidate resins and corresponding manufacturing methods.

In particular, there are a few theoretical suitable resins for high-temperature applications such as those disclosed in US 6,359,107 "Composition of and method for making high performance resins for infusion and transfer molding processes". On the other hand preimpregnated materials could be used in filament winding manufacturing processes for complex geometries.

The inventors have found a suitable combination for said hot air bleed duct comprising:
- a braided carbon fiber fabric as fibrous reinforcement;
- a phenylethynyl-terminated imide as resin;
- a resin injection/infusion method as manufacturing method.

The braided carbon fiber fabric was selected as reinforcement to assure good internal adaptability to complex geometries (drapping), and thus, tightness of the duct, better support of the structure and greater retention of duct design dimensional tolerances. Fiber distortion associated to complex geometry has been characterized and validated. The braiding (deviation in the original orientation of the fibers in the fabric) is distorted because, prior to injection, this will remove the "sizing" (1-2 hrs. @ 400°C) to avoid porosity problems during the process to remove the sizing tissue. To assess the effect of the slight distortion of fibers in ducts of complex geometry shear tests (IPSS) were performed reproducing the distortion of the braiding (laminated to ±60° instead of ±45 degrees), and found that this does not impact on the mechanical behavior of the laminate.

The phenylethynyl-terminated imide was selected as resin for the prototype because it is a resin having a glass transition temperature (Tg) of 330ºC, a service temperature ranging 290-315ºC, and an excellent thermo-oxidative behavior because it will not release volatiles or lose weight in service conditions. For the study of the Thermo Oxidative Stability (TOS) coupons at the service temperature (230ºC) were aged monitoring the weight loss (and dimensional change) up to 2000 hrs. The behavior of the material was pretty good and the total weight loss observed after 2000hs at 230ºC is below 0.8% (with no significant changes in dimensions, width or thickness). Coupons were aged also at the "excursion" temperatures (260 & 290ºC) during 100 hrs. the weight loss in these cases were below 0.6 & 0.9 respectively. The Outgassing Identification (OI) was carried out by TG-FTIR. A dynamic scan from 300 to 1000ºC (10ºC/min) and an isothermic scan at 300ºC during 10hs was done. No release of volatiles occurred below 300ºC (or if it happened, the quantity was so small that was below the detection limit of the FTIR).

A Resin Transfer Molding (RTM) method was selected as a convenient manufacturing method in an industrial environment given the complexity of the geometry and the sealing requirements of hot air bleed ducts.

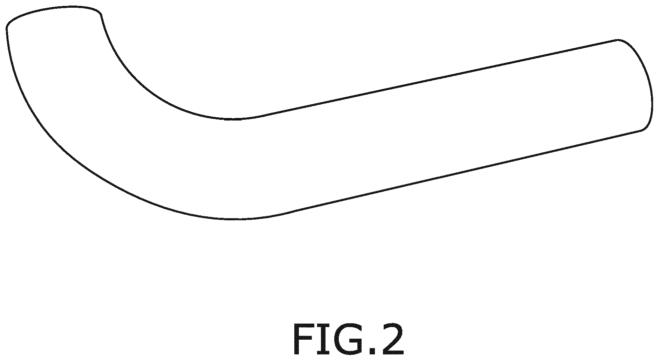

In order to validate the invention it has been manufactured, as a prototype, the duct illustrated in Figure 2 that includes a 90º elbow.

As braided carbon fiber fabric the commercial product T650-35, marketed and sold by A&P Technology, was used.

As phenylethynyl-terminated imide, the commercial product PETI-330 marketed and sold by UBE Industries LDT, was used.

The RTM method was adapted to the high viscosity of the phenylethynyl-terminated imide resin (3 orders of magnitude greater than the standard injection resins, RTM6 type), to the high temperatures of the process (injection at 280°C, curing at 370° C) and to a constant pressure of 12-13 atm. A special assembly for manufacturing the prototype was prepared to meet these and other requirements.

The structural analysis was done by a finite element model (ABAQUS) resulting in a duct thickness of 1,08 mm (4 layers of braided carbon fiber fabric).

The density of the prototype material is about 1.6x10-6 kg/mm3. Commonly, the current hot air bleed ducts of a titanium alloy have a density 4.5x10-6 kg/mm3 and a thickness of 0.7 mm. Therefore, the prototype represents a weight saving of 45%. Even though this is a first theoretical approach to design, which does not consider coupling elements, joints, terminals, connections, unions, it does allow securing a weight saving of around 30%.

The prototype manufactured met all the requirements. A pressure test was performed and the duct exceeded the explosion pressure required, 12 bar, (the test was continued up to 26 bar).

Although the present invention has been described in connection with various embodiments, it will be appreciated from the specification that various combinations of elements, variations or improvements therein may be made, and are within the scope of the invention as defined by the appended claims.

## Claims

1. A non-straight duct for conducting fluids at temperatures higher than 280ºC and pressures higher than 4 bar made of a composite material comprising layers of a carbon fiber fabric and a high temperature resin injected or infused in said layers, **characterized in that** the carbon fiber fabric is a braided carbon fiber fabric and the high temperature resin is a phenylethinyl-terminated imide.

2. A non-straight duct according to claim 1, wherein the high temperature resin is configured to be injected or infused in a temperature range of 280-290ºC and in a pressure range of 12-13 atm.

3. Aircraft bleeding system comprising one or more non-straight ducts according to any of claims 1-2.

4. Aircraft propulsion system comprising a bleeding system according to claim 3.

5. Process for bleeding hot gases in an aircraft using one or more non-straight ducts made of a composite material comprising layers of a carbon fiber fabric and a high temperature resin injected or infused in said layers, **characterized in that** the carbon fiber fabric is a braided carbon fiber fabric and the high temperature resin is a phenylethinyl-terminated imide.

6. Process according to claim 5, wherein the high temperature resin is injected or infused in a temperature range of 280-290ºC and in a pressure range of 12-13 atm.

## Patentansprüche

1. Ungerade Leitung zum Führen von Fluiden mit Temperaturen über 280 °C und Drücken über 4 bar, die aus einem Verbundmaterial hergestellt ist, das Schichten aus einem Kohlefasergewebe und ein Hochtemperaturharz aufweist, das in die Schichten injiziert oder infundiert ist, **dadurch gekennzeichnet, dass** das Kohlefasergewebe ein geflochtenes Kohlefasergewebe ist und das Hochtemperaturharz ein Imid mit endständiger Phenylethinylgruppe ist.

2. Ungerade Leitung nach Anspruch 1, wobei das Hochtemperaturharz so konfiguriert ist, dass es in einem Temperaturbereich von 280 bis 290 °C und in einem Druckbereich von 12 bis 13 atm injiziert oder infundiert wird.

3. Abblasesystem für Luftfahrzeuge mit einem oder mehreren ungeraden Leitungen nach Anspruch 1 oder 2.

4. Antriebssystem für Luftfahrzeuge mit einem Abblasesystem nach Anspruch 3.

5. Verfahren zum Abblasen heißer Gase in einem Luftfahrzeug unter Verwendung einer oder mehrerer ungerader Leitungen, die aus einem Verbundmaterial hergestellt sind, das Schichten aus einem Kohlefasergewebe und ein Hochtemperaturharz aufweist, das in die Schichten injiziert oder infundiert ist, **dadurch gekennzeichnet, dass** das Kohlefasergewebe ein geflochtenes Kohlefasergewebe ist und das Hochtemperaturharz ein Imid mit endständiger Phenylethinylgruppe ist.

6. Verfahren nach Anspruch 5, wobei das Hochtemperaturharz in einem Temperaturbereich von 280 bis 290 °C und in einem Druckbereich von 12 bis 13 atm injiziert oder infundiert wird.

## Revendications

1. Conduit non droit pour conduire des fluides à des températures supérieures à 280°C et des pressions supérieures à 4 bars, réalisé en un matériau composite comprenant des couches d'un tissu de fibres de carbone et une résine à haute température injectée dans lesdites couches ou imprégnant celles-ci, **caractérisé en ce que** le tissu de fibres de carbone est un tissu de fibres de carbone tressé et **en ce que** la résine à haute température est un imide à terminaison phényléthynyle.

2. Conduit non droit selon la revendication 1, dans lequel la résine à haute température est configurée de façon à être injectée ou amenée à produire une imprégnation dans une plage de température de 280 à 290°C et dans une plage de pression de 12 à 13 atmosphères.

3. Système d'extraction de gaz d'aéronef comprenant un ou plusieurs conduits non droits selon l'une quelconque des revendications 1 et 2.

4. Système de propulsion d'aéronef comprenant un système d'extraction de gaz selon la revendication 3.

5. Procédé pour extraire des gaz chauds dans un aéronef, utilisant un ou plusieurs conduits non droits réalisés en un matériau composite comprenant des couches d'un tissu de fibres de carbone et une résine à haute température injectée dans lesdites couches ou imprégnant celles-ci, **caractérisé en ce que** le tissu de fibres de carbone est un tissu de fibres de carbone tressé et **en ce que** la résine à haute température est un imide à terminaison phényléthynyle.

6. Procédé selon la revendication 5, dans lequel la résine à haute température est injectée ou amenée à produire une imprégnation dans une plage de température de 280 à 290°C et dans une plage de pression de 12 à 13 atmosphères.
